# EUROPEAN PATENT APPLICATION

(11) **EP 2 916 020 A2**
(43) Date of publication of application: **09.09.2015**
(21) Application number: 15157525.5
(22) Date of filing: 04.03.2015
(51) Int. Cl.: F16D 3/06, F16D 1/10

(54) **RESIN COATING FORMING METHOD FOR SPLINE SHAFT AND SPLINE SHAFT**

(30) Priority: 07.03.2014 JP 2014045145
(71) Applicant: JTEKT CORPORATION, Osaka-shi Osaka 542-8502 (JP)
(72) Inventor: Nishida, Tomoya, Osaka-shi, Osaka, 542-8502 (JP)
(74) Representative: Winter, Brandl, Fürniss, Hübner, Röss, Kaiser, Polte - Partnerschaft mbB

(57) **Abstract**

A resin film is caught in a meshing portion between a spline shaft and a toothed roller. The spline shaft has an adhesive applied to the surface of splines formed on the outer periphery of the spline shaft, and has been heated. The toothed roller is rotatable about a center axis that is parallel to a center axis of the spline shaft. The resin film is wound up around the outer periphery of the spline shaft while the resin film is pressed to be adhered to the surface of the splines by the toothed roller at the meshing portion along with interlocked rotation of the spline shaft and the toothed roller. Consequently, a resin coating is formed on the surface of the splines.

## Description

### BACKGROUND OF THE INVENTION

### 1. Field of the Invention

The present invention relates to a resin coating forming method for a spline shaft, and to a spline shaft.

### 2. Description of Related Art

Hitherto, a fluidized-bed coating method has been commonly used as a method of forming a resin coating on the surface of splines on the outer periphery of a spline shaft (see Japanese Patent Application Publication No. 2012-197838 (JP 2012-197838 A), for example). That is, a spline shaft to which a primer has been applied and which has been heated is immersed in a fluidized bed of resin powder for a certain period of time to cause the resin powder to adhere to the surface of splines to form a resin layer (fluidized-bed coating process). After that, the spline shaft is taken out of the fluidized bed, and cooled (cooling process).

In the fluidized-bed coating process, an amount of resin powder that is enough to apply the resin powder to the bottom land of the splines, and therefore a thick resin layer is formed. Thus, in order to reduce the final thickness of the resin coating, the surface of the resin layer is broached (broaching process).

However, voids (air bubbles) may be formed at the boundary between the resin layer and the surface of the splines during the cooling after the fluidized-bed coating, and the resin layer may be peeled off during the broaching, which increases the rate of defectives caused during the manufacture. This increases the cost of manufacture. In addition, since a part of the resin layer is broached during the broaching, a large material loss is caused, which also increases the cost of manufacture. In the case where a part of the resin coating is applied to a portion of the spline shaft to which no primer has adhered, meanwhile, the resin coating may be cracked, starting from the above-mentioned part, by a stress load (so-called heat shock) due to variations in temperature during use, which degrades durability.

In addition, it is difficult to perform the broaching process with good positioning with respect to the splines. Therefore, it is difficult to make the final thickness of the resin coating uniform, which degrades quality.

### SUMMARY OF THE INVENTION

An object of the present invention is to provide a resin coating forming method for a spline shaft and a spline shaft that provide a resin coating with high quality and high durability at a low cost.

An aspect of the present invention provides a resin coating forming method for a spline shaft, including: causing a resin film to be caught in a meshing portion between a spline shaft and a toothed roller, the spline shaft having an adhesive applied to a surface of splines formed on an outer periphery of the spline shaft and having been heated, and the toothed roller being rotatable about a center axis that is parallel to a center axis of the spline shaft; and winding up the resin film around the outer periphery of the spline shaft while the resin film is pressed to be adhered to the surface of the splines by the toothed roller at the meshing portion along with interlocked rotation of the spline shaft and the toothed roller to form a resin coating on the surface of the splines.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic view illustrating an adhesive application process in a resin coating forming method for a spline shaft according to a first embodiment of the present invention;
FIGS. 2A to 2D sequentially illustrate the flow of a resin coating forming process according to the first embodiment;
FIG. 3 is a schematic view of an essential portion of a toothed roller according to the first embodiment;
FIGS. 4A to 4D sequentially illustrate the flow of a resin coating forming process of a resin coating forming method for a spline shaft according to a second embodiment of the present invention;
FIG. 5 is a schematic view illustrating a final stage of a resin coating forming process of a resin coating forming method for a spline shaft according to a third embodiment of the present invention; and
FIG. 6 is a schematic view illustrating an intermediate stage of a resin coating forming process of a resin coating forming method for a spline shaft according to a fourth embodiment of the present invention.

### DETAILED DESCRIPTION OF EMBODIMENTS

Preferred embodiments of the present invention will be described with reference to the drawings.

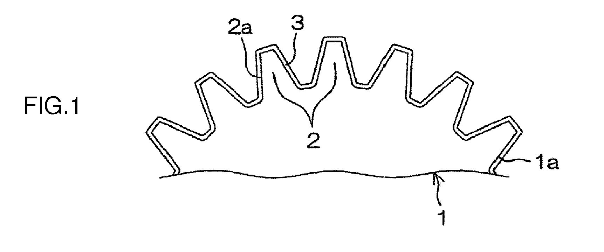

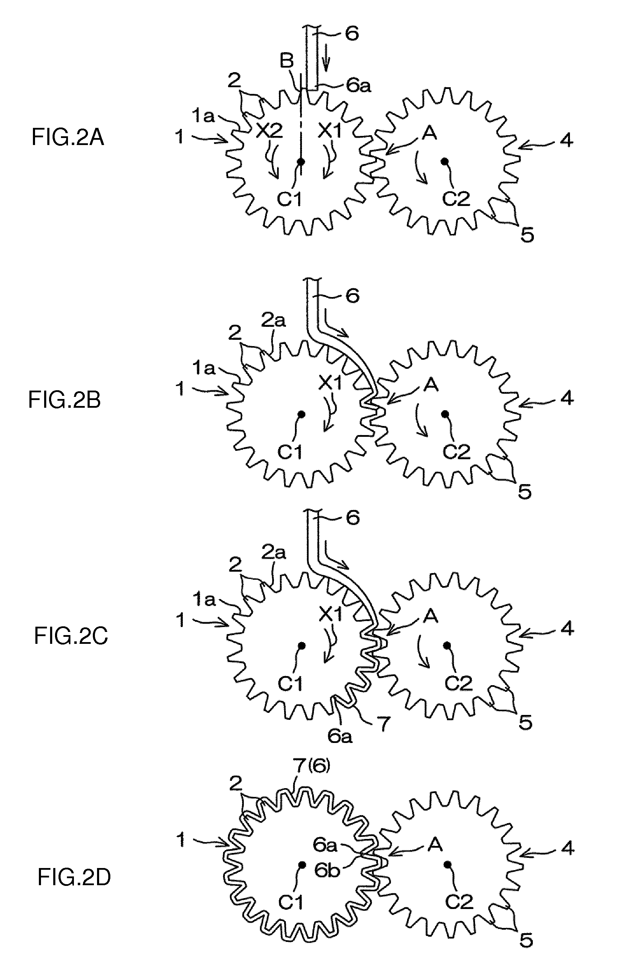

FIG. 1 and FIGS. 2A to 2D sequentially illustrate a resin coating forming method for a spline shaft according to a first embodiment of the present invention. In an adhesive application process illustrated in FIG. 1, first, an adhesive 3, e.g. a primer, is applied to a surface 2a of splines 2 formed on an outer periphery 1a of a spline shaft 1.

FIGS. 2A to 2D sequentially illustrate the flow of a resin coating forming process.

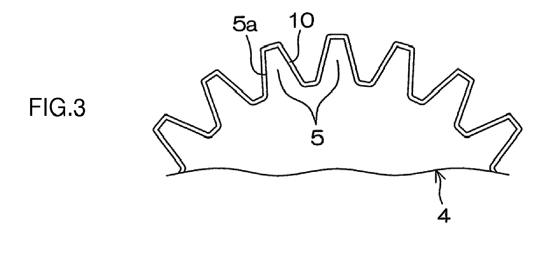

As illustrated in FIG. 2A, a toothed roller 4 is disposed at a side of the spline shaft 1, for example, to face the spline shaft 1. The toothed roller 4 has a center axis C2 that is parallel to a center axis C1 of the spline shaft 1 which has been heated by a heater (not illustrated). Teeth 5 of the toothed roller 4 are disposed with the same circumferential pitch as the circumferential pitch of the splines 2 of the spline shaft 1. As illustrated in FIG. 3, a surface 5a of the teeth 5 of the toothed roller 4 is coated with a release layer 10. The release layer 10 is formed by coating the surface 5a with a known release agent such as a silicone resin, for example.

As illustrated in FIGS. 2A to 2C, the spline shaft 1 and the toothed roller 4 are rotated in conjunction with each other. For example, the toothed roller 4 may be driven to be rotated about the center axis C2, and the spline shaft 1 may be rotated about the center axis C1 in accordance with the rotation of the toothed roller 4. Alternatively, both the spline shaft 1 and the toothed roller 4 may be driven to be rotated synchronously.

As illustrated in FIG. 2A, one end 6a of a resin film 6 is supplied to a meshing portion A between the spline shaft 1 and the toothed roller 4 on the outer periphery 1a of the spline shaft 1 which is rotating. Specifically, as illustrated in FIG. 2A, the one end 6a of the resin film 6 hung from above contacts a predetermined position in a region between the meshing portion A and a position B on the outer periphery 1a of the spline shaft 1. The position B is positioned a predetermined distance away from the meshing portion A in a direction X2 that is opposite to a rotational direction X1 of the spline shaft 1 (that is, positioned upstream of the meshing portion A in the rotational direction X1).

Consequently, the one end 6a of the resin film 6 is moved together with the outer periphery 1a of the spline shaft 1 from the state illustrated in FIG. 2A to the state illustrated in FIG. 2B to be fed to the meshing portion A along with the rotation of the spline shaft 1. In the case where the toothed roller 4 is disposed at a side of the spline shaft 1 as illustrated in FIG. 2A, for example, the position B is located above the center axis C1 on the outer periphery 1a of the spline shaft 1.

The resin film 6 is made of a thermoplastic resin. The resin film 6 may be made of engineering plastic, for example. As the engineering plastic, polyamide (PA) with high slidability is preferably used. Specifically, PA 11, PA 12, PA 610, and PA 612 may be used. Alternatively, the resin film 6 may be made of at least one super engineering plastic selected from polyphenylene sulfide (PPS), polyether ether ketone (PEEK), polyarylate (PAR), polyethersulfone (PES), polyimide (PI), polyetherimide (PEI), fluorine resins, and other thermoplastic resins.

As illustrated in FIGS. 2B and 2C, the resin film 6 is wound up around the outer periphery 1a of the spline shaft 1 while the resin film 6 is pressed to be adhered to the surface 2a of the splines 2 at the meshing portion A along with interlocked rotation of the spline shaft 1 and the toothed roller 4. In this event, the surface 5a of the teeth 5 of the toothed roller 4 is coated with the release layer 10 (see FIG. 3). This suppresses adhesion of the resin film 6 to the toothed roller 4 side.

When the spline shaft 1 makes generally one rotation from the state illustrated in FIG. 2B in which the one end 6a of the resin film 6 is caught in the meshing portion A, a resin coating 7 is formed on the surface 2a of the splines 2 over the entire circumference of the spline shaft 1 with the one end 6a and the other end 6b of the resin film 6 located proximate to each other, just contacting each other, or overlapping each other by a minute amount.

In this embodiment, the resin film 6 is pressed by the toothed roller 4 to be uniformly spread while being heated at the meshing portion A to provide flowability. Thus, a resin coating with a uniform thickness and a high quality can be obtained.

In addition, a cutting process such as the broaching in the related art is not required, which does not cause a crack during processing or a material loss. The resin film 6 which is sequentially fed to the meshing portion A is pressed to the splines 2 side by the toothed roller 4. This suppresses occurrence of a shaping failure with air bubbles remaining on the back side of the resin film 6. Thus, the cost of manufacture can be reduced.

The width of the resin film 6 can be freely adjusted such that the resin film 6 does not lie off a portion to which the adhesive 3 has been applied. As a result, formation of the resin coating 7 on a portion to which the adhesive 3 has not been applied can be suppressed. Consequently, it is possible to suppress occurrence of a crack in the resin coating 7 due to a heat shock during use, which provides high durability. The one end 6a and the other end 6b of the resin film 6 are preferably adhered to a bottom land between the splines 2. This is because the bottom land does not slide with the mating outer spline shaft when the spline shaft 1 (inner spline shaft) is combined with the mating outer spline shaft, and thus it does not matter at all whether or not the one end 6a and the other end 6a overlap each other at the bottom land.

Use of super engineering plastic as the resin constituting the resin film 6 can provide the resin coating 7 with high wear resistance and high durability.

Since the resin film 6 is supplied to a position away from the meshing portion A in the direction X2, which is opposite to the rotational direction X1, on the outer periphery 1a of the spline shaft 1, the following advantage is obtained. That is, the resin film 6 is sufficiently heated to have high flowability before reaching the meshing portion A from the position on the outer periphery 1a of the spline shaft 1 at which the resin film 6 is supplied, and is caught in the meshing portion A. Thus, it is possible to reliably suppress fluctuations in thickness to provide a resin coating 7 with an even more uniform thickness.

The surface 5a of the teeth 5 of the toothed roller 4 is coated with the release layer 10 (see FIG. 3). This allows the resin film 6 to reliably adhere to the spline shaft 1 without adhesion of the resin film 6 to the toothed roller 4 side. The spline shaft 1 on which a resin coating is formed using the resin coating forming method is suitably used as an intermediate shaft for vehicles interposed between a steering shaft and a steering gear.

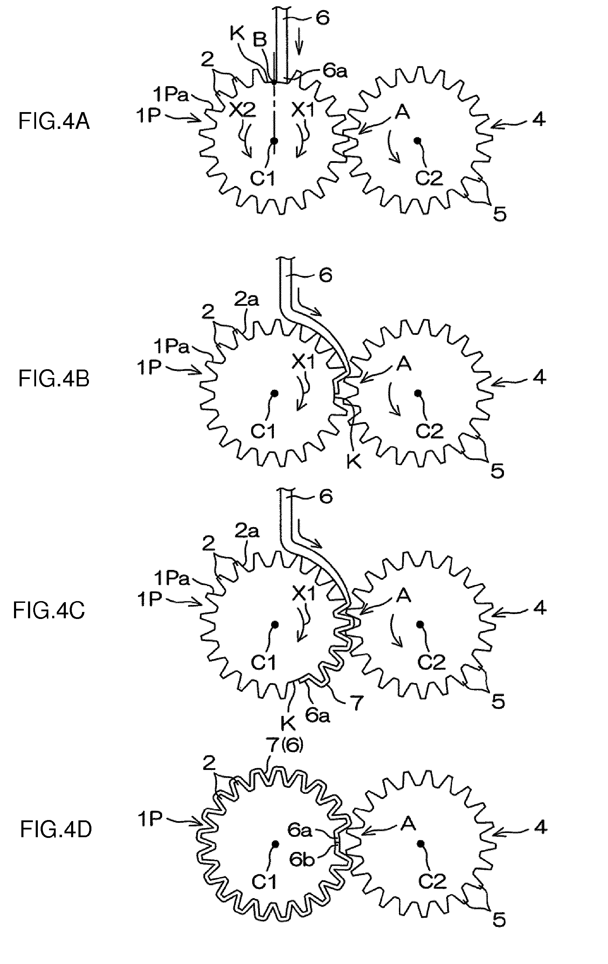

FIGS. 4A to 4D illustrate processes of a resin coating forming method according to a second embodiment of the present invention.

This embodiment is different from the resin coating forming method according to the first embodiment in the following point. A toothless region K on which splines 2 are not provided is provided on a part of an outer periphery 1Pa of a spline shaft 1P, and one end 6a and the other end 6b of a resin film 6 are disposed in the toothless region K. Constituent elements of the second embodiment of FIGS. 4A to 4D that are the same as those of the first embodiment of FIGS. 2A to 2D are given the same reference numerals as those given to the constituent elements of the first embodiment of FIGS. 2A to 2D.

As illustrated in FIG. 4A, the one end 6a of the resin film 6 is supplied so as to contact the toothless region K on the outer periphery 1Pa of the spline shaft 1P. The other end 6b of the resin film 6 is adhered to the toothless region K in the state illustrated in FIG. 4D (a state in which the toothless region K reaches the meshing portion A again) in which the spline shaft 1P has made generally one rotation from the state illustrated in FIG. 4B in which the one end 6a of the resin film 6 in the toothless region K is caught in the meshing portion A.

According to this embodiment, the same effect as the effect of the first embodiment can be achieved. Further, the function of the spline shaft 1P is not affected at all irrespective of whether or not the one end 6a and the other end 6b of the resin film 6 wound up by the spline shaft 1P overlap each other in the toothless region K. In addition, the toothless region K can be caused to function as a grease pool when the spline shaft 1P (inner spline shaft) is combined with the mating outer spline shaft.

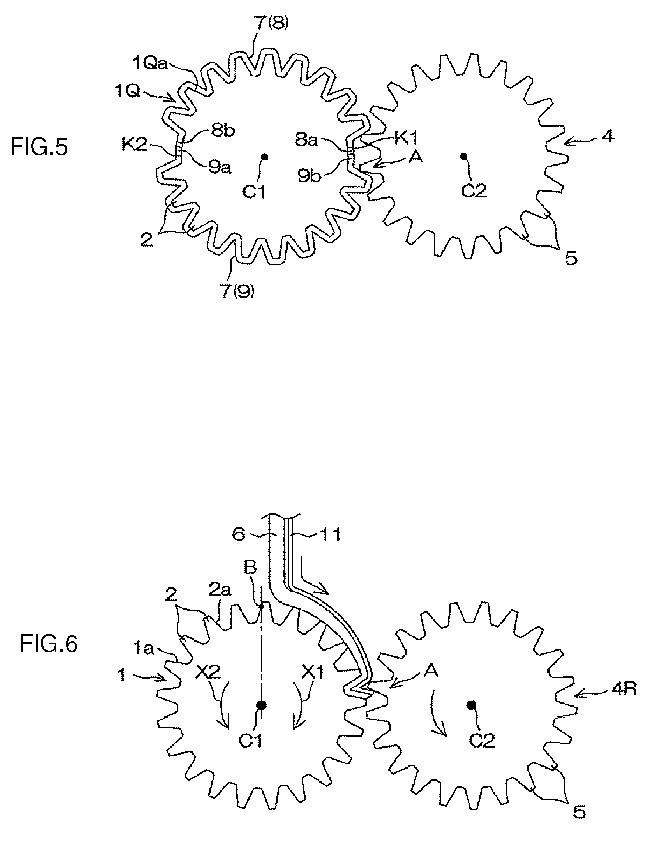

FIG. 5 illustrates a third embodiment as a modification of the second embodiment. In the second embodiment of FIGS. 4A to 4D, a single toothless region K is provided. In the third embodiment illustrated in FIG. 5 [corresponding to the state of FIG. 2D at the time when the coating forming process is finished], in contrast, a first toothless region K1 and a second toothless region K2 are disposed away from each other in the circumferential direction on an outer periphery 1Qa of a spline shaft 1Q, and a first resin film 8 and a second resin film 9 are used. The two toothless regions K1 and K2 may be disposed at positions that are opposite to each other in the radial direction, for example.

One end 8a of the first resin film 8 and the other end 9b of the second resin film 9 are disposed in the first toothless region K1. The other end 8b of the first resin film 8 and one end 9a of the second resin film 9 are disposed in the second toothless region K2. The same material as the material of the resin film 6 according to the first embodiment is used as the material of the resin films 8 and 9. Constituent elements of the third embodiment of FIG. 5 that are the same as those of the second embodiment of FIG. 2D are given the same reference numerals as those given to the constituent elements of the second embodiment of FIG. 2D.

According to the third embodiment, the same effect as the effect of the first embodiment can be achieved. Further, the function of the spline shaft 1Q is not affected at all irrespective of whether or not the corresponding end portions of the resin films 8 and 9 overlap each other in the toothless regions K1 and K2. In addition, the toothless regions K1 and K2 can be caused to function as grease pools when the spline shaft 1Q (inner spline shaft) is combined with the corresponding outer spline shaft.

Three or more toothless regions may be provided, and a corresponding number of resin films may also be used.

In the first to third embodiments, the surface of the teeth 5 of the toothed roller 4 is coated with the release layer 10 (see FIG. 3). Instead, the resin film 6 and a release film 11 which is disposed nearer to a toothed roller 4R than the resin film 6 may be caught in the meshing portion A in an overlapping manner as in a fourth embodiment illustrated in FIG. 6. A known release film may be used as the release film 11. For example, a resin film with high release properties such as polypropylene (PP), PE (polyethylene), or PET (polyethylene terephthalate) or such a resin film coated with a release resin such as a silicone resin may be used as the release film 11.

In the fourth embodiment, the release film 11 is interposed between the resin film 6 and the toothed roller 4R at the meshing portion A. Thus, the resin film 6 can be reliably caused to adhere to the spline shaft 1.

The present invention is not limited to the embodiments described above, and may be modified in various ways without departing from the scope and spirits of the present invention.

## Claims

1. A resin coating forming method for a spline shaft, comprising:
causing a resin film to be caught in a meshing portion between a spline shaft and a toothed roller, the spline shaft having an adhesive applied to a surface of splines formed on an outer periphery of the spline shaft and having been heated, and the toothed roller being rotatable about a center axis that is parallel to a center axis of the spline shaft; and
winding up the resin film around the outer periphery of the spline shaft while the resin film is pressed to be adhered to the surface of the splines by the toothed roller at the meshing portion along with interlocked rotation of the spline shaft and the toothed roller to form a resin coating on the surface of the splines.

2. The resin coating forming method for a spline shaft according to claim 1, wherein the spline shaft includes a toothless region to which one end or the other end of the resin film is attached.

3. The resin coating forming method for a spline shaft according to claim 1 or 2, wherein
the resin film is made of at least one super engineering plastic selected from polyphenylene sulfide (PPS), polyether ether ketone (PEEK), polyarylate (PAR), polyethersulfone (PES), polyimide (PI), polyetherimide (PEI), fluorine resins, and other thermoplastic resins.

4. The resin coating forming method for a spline shaft according to any one of claims 1 to 3, wherein
a surface of teeth of the toothed roller is coated with a release layer.

5. The resin coating forming method for a spline shaft according to any one of claims 1 to 3, wherein
the resin film and a release film disposed nearer to a toothed roller than the resin film are caught in the meshing portion in an overlapping manner.

6. The resin coating forming method for a spline shaft according to any one of claims 1 to 5, wherein
the resin film is supplied to a position on the outer periphery of the spline shaft away from the meshing portion in a direction that is opposite to a rotational direction.

7. A spline shaft comprising:
a resin coating formed on a surface of splines using the resin coating forming method for a spline shaft according to any one of claims 1 to 6.
